# EUROPEAN PATENT SPECIFICATION

(11) **EP 3 039 776 B1**
(45) Date of publication and mention of the grant of the patent: **01.11.2017**
(21) Application number: 13753335.2
(22) Date of filing: 29.08.2013
(51) Int. Cl.: H02K 5/18, H02K 15/02, H02K 15/14

(54) **ELECTRICAL MACHINE WITH STATOR HOUSING HAVING IMPROVED COOLING EFFICIENCY**
ELEKTRISCHE MASCHINE MIT EINEM STATORGEHÄUSE MIT ERHÖHTER KÜHLUNGSEFFIZIENZ
MACHINE ÉLECTRIQUE À BOÎTIER DE STATOR À EFFICACITÉ DE REFROIDISSEMENT AMÉLIORÉE

(43) Date of publication of application: 06.07.2016
(73) Proprietor: Arçelik Anonim Sirketi, 34950 Istanbul (TR)
(72) Inventor: GEDIK, Hakan, 34950 Istanbul (TR); OZBAGRIACIK, Metin, 34950 Istanbul (TR); UZER, Onur, 34950 Istanbul (TR); SEVGEN, Erdem, 34950 Istanbul (TR)
(86) International application number: PCT/EP2013/067930
(87) International publication number: WO 2015/028073

(56) References cited:
- WO-A1-95/14325
- DE-U- 7 129 403
- GB-A- 2 314 692
- US-A- 2 711 492
- US-A- 2 769 933
- US-A- 5 630 461

## Description

The present invention relates to rotary electrical machines and more particularly stator cooling housings of such rotary electrical machines.

Electric machines rely on the principle of rotating magnetic fields with a magnetic part or rotor. For instance, AC electric motors comprises rotor or a configuration of insulated wire coils in a stationary part, i.e. the stator. Current flow generates magnetic fields in the space of the stator. Stator casings are made from ferromagnetic laminates and longitudinal slots in the stator casing define tooth-like cross sections, i.e. poles.

Electrical machines, such as electric motors or alternators are extensively known to the person in the art. The stator of such machines comprises core slots along which a stator coil is disposed, a plurality of teeth being connected to the stator core by a yoke portion. The cylindrical stator core is provided with a longitudinal hole inside which the rotor is housed. The stator windings are disposed in a plurality of core slots formed by radially extending layers such that straight portions of the windings extend in the slots and end loop sections thereof connect two adjacent straight portions.

It is conventional to support a stator core within a stator housing or frame. The stator housing or frame may have external support feet or pads. It is also a common practice to provide generally longitudinal fins on the external surface of the stator core, which enhance cooling by means of air passing over or around the fins during operation.

A prior art publication in the technical field of the present invention may be referred to as EP 0 072 999, disclosing a generator with an annular stator lamination stack held on its outer circumference in a housing where several cut-outs in the housing wall, with the effect of cooling channels, is provided between each two of a plurality of mating zones between the housing wall and the stator, and radially projecting extensions which project into the cut-outs are cut on the outer rim of the stator plates. US 2 711 492 discloses a stator made of laminae that comprise slots to receive windings and that are embedded in a holding structure of Aluminium which is cast around the outer periphery of the laminae. The laminae further comprise recesses on their periphery into which Aluminium enters during casting to provide dovetail connections between the holding structure and the laminae.

GB 2 314 692 discloses integrally formed cooling fins in stator laminations.

The present invention provides an electrical machine having a stator in which the laminations that are stacked one above the other have a monolithic stator housing with improved cooling function.

The present invention therefore provides an electrical machine with a stator housing as defined by the characterizing features as given in Claim 1.

Primary object of the present invention is to provide an electrical machine with a stator housing having improved cooling function.

The present invention proposes an electrical machine having a stator with a stator housing, the latter manufactured by Aluminium injection moulding by which Aluminium is injected directly on the stator core inside a mould. The stator core comprising a plurality of longitudinal grooves in the form of peripheral non-uniformities along the outer periphery of the stator core, Aluminium injected directly on the stator core filling and covering the longitudinal grooves where the stator housing is obtained. Longitudinal grooves are provided to increase Aluminium injection surface and said grooves are disposed annularly in alignment with the inwardly projecting teeth inside the stator.

Making an analogy to a square, said stator housing has four lateral sides where a plurality of fins projects from a first lateral side in a first set of parallel directions and a plurality of fins projects from a second lateral side in a second set of parallel directions. Each lateral side has a plurality of longitudinal fins in parallel.

The outermost tips of the fins projecting outwardly from a lateral side form an arc shape or trajectory with the same direction of curvature at each lateral side. The present invention further proposes a method for assembling a stator of an electrical machine.

Accompanying drawings are given solely for the purpose of exemplifying the electrical machine of the present invention whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

Fig. 1 demonstrates a schematic view of an electric machine having a monolithic stator housing according to the present invention.

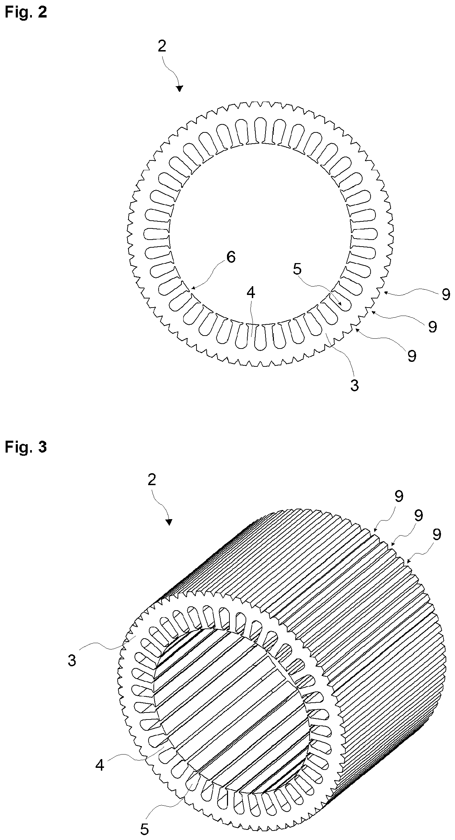

Fig. 2 demonstrates a top planar view of a stator core according to the present invention.
Fig. 3 demonstrates a general perspective view of a stator core according to the present invention.

The following numerals are used in this detailed description:
1. Electrical machine
2. Stator core
3. Lamination
4. Teeth
5. Winding slot
6. Claw portion
7. Stator housing
8. Fin
9. Groove
10. Lateral side
11. Side fins

The present invention provides an electrical machine (1) typically having a stator core (2) and an inner rotor (not shown) disposed in a space formed on an inner side of the stator core (2) to enable rotation of the rotor with respect to the stator core (2), in a manner conventionally connected to a shaft. The stator core (2) has a stack of laminations (3), i.e. a plurality of laminations (3) stacked one above the other, the individual laminations (3) being stamped out so as to be identical.

Each lamination (3) has a set of inwardly projecting teeth (4) extending successively along the inner periphery of the stator core (2) to form winding slots (5) that receive windings of the stator (2). To this end, laminations (3) are aligned such that said inwardly projecting teeth (4) as well as claw portions (6) of the laminations (3) longitudinally define the axially extending winding slots (5) receiving the windings.

Further, the electric machine (1) comprises a stator housing (7) supporting the stator core (2) in a conventional manner. The stator housing (7) or frame has external longitudinal fins (8) on the external surface of the stator housing (7). The stator housing (7) itself is manufactured by metal injection moulding, the method being known to the person in the art.

According to present invention, the electric machine (1) comprises a plurality of longitudinal grooves (9) which are placed along the lateral surface of the stator core (2) and the stator housing (7) is produced by Aluminium injection molding on said lateral surface of stator core (2) by filling and covering the grooves (9) with the injection material i.e. Aluminium.

The stator housing (7) supporting the stator core (2) is provided by metal injection moulding e.g. Aluminium injection moulding. Aluminium to be injected directly on the stator core (2) inside a mould and said stator core (2) has longitudinal grooves (9) in the form of peripheral non-uniformities along the lateral surface of the stator core (2). the stator core (2) comprising a plurality of longitudinal grooves (9) in the form of peripheral non-uniformities along the lateral surface of the stator core (2). Said longitudinal grooves (9) are filled and covered with the injected Aluminium so as to form inner peripheral surface of the stator housing (7).

The monolithic stator housing (7) of the invention is advantageous in that the stator core (2) (or the stack of laminations (3)) with an increased lateral surface area is fully covered by the stator housing (7) such that peripheral non-uniformities, i.e. longitudinal grooves (9) on the lateral surface of the stator core (2) are filled by injection moulding where an increased contact area is obtained.

In an embodiment of the present invention. said longitudinal grooves (9) are disposed annularly in alignment with said inwardly projecting teeth (4) and winding slots (5) to provide a corresponding evenly distributed cooling effect in response to eddy currents.

According to the present invention, the stator housing (7) is manufactured by Aluminium injection moulding so as to obtain a stator housing (7) that is being injected directly on the stator core (2) inside a mould. Aluminium injection moulding is specifically advantageous in that the final monolithic product has a lower thermal resistance between the ferromagnetic core material and the Aluminium stator housing (7). The monolithic stator housing (7) around the stator core (2), also having a plurality of longitudinal fins (8) on the external surface thereof, therefore ensures that an improved cooling performance is obtained. Aluminium injection moulding is likewise critical in that it provides a full envelope that is encircling the stator core (2) by the stator housing (7) in full contact therewith.

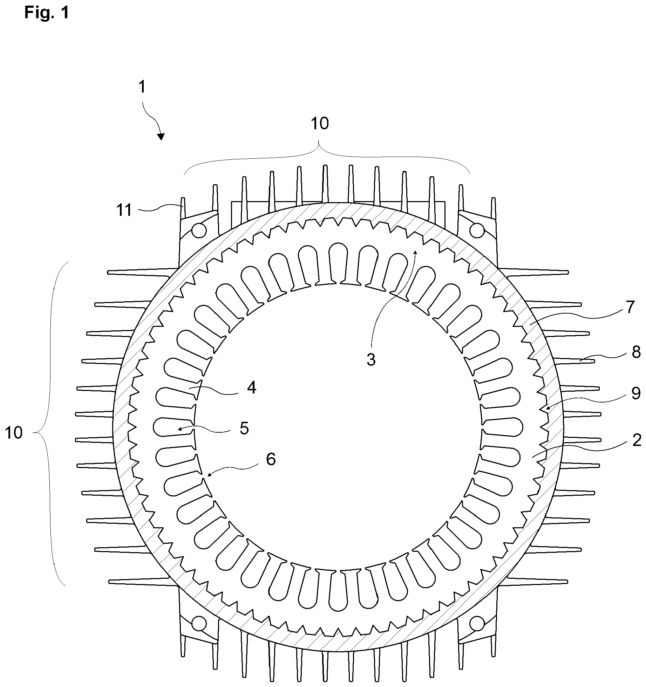

Used in reference to a square, the stator housing (7) of the invention has four lateral sides (10) as shown in Fig. 1. According to the present invention, a first group of fins (8) projects from at least a first lateral side (10) of the stator housing (7) in a first set of parallel directions and a second group of fins (8) projects from at least a second lateral side (10) of the stator housing (7) in a second set of parallel directions. Any of the fins (8) in said first group of fins (8) is perpendicular to any other fin (8) in said second group of fins (8). In other words, fins (8) that extend in neighbouring lateral sides (10) have perpendicular directions.

The outermost tips of the fins (8) projecting outwardly from a lateral side (10) form an arc shape with the same direction of curvature at each lateral side (10) of the stator housing (7). This contributes to overall thermal dissipation efficiency due to more homogenous heat distribution. Further, due to the fact that each lateral side (10) is divided by a longitudinal region at the corners, having no fins (8), the side fins (11) at the side ends of a lateral side (10) are designed such that they have adjacent root portions projecting from neighbouring sides (10).

The present invention further proposes a method for assembling a stator core (2) of an electrical machine (1), said method comprising the steps of (a) assembling each lamination (3) or group of core laminations in a successive manner, (b) fixating successively assembled core laminations (3) or group of core laminations (3) in the axial direction of the stator (2), (c) injecting Aluminium directly on the stator core (2) inside a mould by Aluminium injection moulding such that the housing (7) is shaped so as to comprise four lateral sides (10) where a first group of fins (8) projects from at least a first lateral side (10) of the stator housing (7) in a first set of parallel directions and a second group of fins (8) projects from at least a second lateral side (10) of said stator housing (7) in a second set of parallel directions, fins (8) in said first and second groups being perpendicular to each other.

According to the present invention, the synergistic cooling effect by the optimum thermal resistance between the ferromagnetic core material and the Aluminium stator housing (7), which is fully covering the stator core (2), is further enhanced by the increased contact area in the vicinity of individual peripheral non-uniformities, i.e. the longitudinal grooves (9).

## Claims

1. An electrical machine (1) having a stator core (2) and an inner rotor disposed in a space formed inside the stator core (2) and rotatable with respect to the stator core (2) in a manner connected to a shaft, said stator core (2) having a plurality of laminations (3) stamped out in an identical manner and stacked one above the other, each lamination (3) having a plurality of inwardly projecting teeth (4) extending successively along an inner periphery of the stator core (2) to form winding slots (5) that receive windings;
wherein
a stator housing (7) supporting the stator (2) core is provided by Aluminium injection moulding,
the stator core (2) comprises a plurality of longitudinal grooves (9) in the form of peripheral non-uniformities along the lateral surface of the stator core (2) and said longitudinal grooves (9) being filled and covered with the injected Aluminium so as to form inner peripheral surface of the stator housing (7), **characterized in that**
the longitudinal grooves (9) are disposed annularly, each groove (9) being in alignment with respectively one of said inwardly projecting teeth (4) and winding slots (5).

2. The electrical machine (1) as in Claim 1, **characterized in that** the stator housing (7) has external longitudinal fins (8) on the external surface thereof with four lateral sides (10) where a first group of fins (8) projects from at least a first lateral side (10) of the stator housing (7) in a first set of parallel directions and a second group of fins (8) projects from at least a second lateral side (10) of the stator housing (7) in a second set of parallel directions, any of the fins (8) in said first group of fins (8) being perpendicular to any other fin (8) in said second group of fins (8).

3. The electrical machine (1) as in Claim 2, **characterized in that** the outermost tips of the fins (8) projecting outwardly from a lateral side (10) form an arc shape with the same direction of curvature at each lateral side (10) of the housing (7).

4. The electrical machine (1) as in Claim 2 or 3, **characterized in that** side fins (11) at the side ends of a lateral side (10) are designed such that they have adjacent root portions projecting from neighbouring lateral sides (10).

5. A method for assembling a stator core (2) of an electrical machine (1), said stator core (2) having a plurality of laminations (3) stacked one above the other with a plurality of inwardly projecting teeth (4) extending successively along inner periphery of the stator core (2) to form winding slots (5) and longitudinal grooves (9) in the form of peripheral non-uniformities on the lateral surface of stator core (2), the longitudinal grooves (9) are disposed annularly, each groove (9) being in alignment with respectively one of said inwardly projecting teeth (4) and winding slots (5),
said method comprising the steps of
(a) assembling each lamination (3) or group of laminations (3) in a successive manner,
(b) fixating successively assembled laminations (3) or group of laminations (3) in the axial direction of the stator core (2),
(c) injecting Aluminium directly on the stator core (2) inside a mould by Aluminium injection moulding where Aluminium is injected directly on the stator core
(2) to fill and cover said longitudinal grooves (9) where a stator housing (7) is obtained.

6. A method for assembling a stator housing (7) of an electrical machine (1) as in Claim 5, **characterized in that** the stator housing (7) is shaped so as to comprise four lateral sides (10) where a first group of fins (8) projects from at least a first lateral side (10) of the stator housing (7) in a first set of parallel directions and a second group of fins (8) projects from at least a second lateral side (10) of the stator housing (7) in a second set of parallel directions, fins (8) in said first and second groups being perpendicular to each other.

## Patentansprüche

1. Eine elektrische Maschine (1) mit einem Ständerkern (2) und einem Innenläufer angeordnet in einer Leerstelle gebildet im Innern des Ständerkerns (2) und rotierbar in Bezug auf Ständerkern (2) in einer Weise verbunden zu einem Schaft, besagter Ständerkern (2) hat eine Mehrheit von Blechschnitte (3) ausgestanzt in einer identischen Weise und gestapelt aufeinander, jeder Blechschnitt (3) besitzt eine Mehrheit von innerlich hervorstehenden Zähne (4), die sich hintereinander ausstrecken entlang einer inneren Peripherie des Ständekerns (2), um Wicklungsnute (5) zu bilden, die Wicklungen erhalten; wo
ein Ständergehäuse (7) den Ständerkern (2) unterstützt, die von Aluminium Spritzgießen versorgt ist,
Der Ständerkern (2) enthält eine Mehrheit von longitudinale Rinnen (9) in Form von peripheren Ungleichförmigkeiten entlang der lateralen Oberfläche des Ständerkerns (2) und besagte longitudinale Rinnen (9) sind gefüllt und bedeckt mit gespritztem Aluminium so, um die periphere Oberfläche des Ständergehäuses (7) zu bilden,
**dadurch gekennzeichnet, daß**
longitudinale Rinnen (9) ringförmig angeordnet sind, jede Rinne (9) ist in einer Linie mit bezüglich einer der besagten innerlich hervorstehenden Zähne (4) und Wicklungsnute (5).

2. Die elektrische Maschine (1) nach Anspruch 1, **dadurch gekennzeichnet, daß** das Ständergehäuse (7) äußerliche längslaufende Flossen (8) auf seiner äußeren Oberfläche mit vier lateralen Seiten (10) besitzt, wo eine erste Gruppe von Flossen (8) mindestens von erster lateralen Seite (10) des Ständergehäuse (7) in einem ersten Satz von parallelen Richtungen und eine zweite Gruppe von Flossen (8) mindestens von zweiter lateralen Seite (10) des Ständergehäuse (7) in einem zweiten Satz von parallelen Richtungen projiziert, irgendwelche Flosse (8) in besagter ersten Flossengruppe (8) ist senkrecht zur irgendwelcher Flosse (8) in besagter zweiten Flossengruppe (8).

3. Die elektrische Maschine (1) nach Anspruch 2, **dadurch gekennzeichnet, daß** die äußersten Spitzen der Flossen (8), projizierend nach außen hin von einer lateralen Seite (10) bilden eine Bogenform mit derselben Krümmungsrichtung an jeder lateralen Seite (10) des Gehäuse (7).

4. Die elektrische Maschine (1) nach Anspruch 2 oder 3, **dadurch gekennzeichnet, daß** seitliche Flossen (11) an Enden der Seiten einer lateralen Seite (10) so entworfen sind, daß sie anliegende Grundteile besitzen, die von benachbarten lateralen Seiten projizieren (10).

5. Eine Methode für Montierung einen Ständerkern (2) einer elektrischen Maschine (1), besagter Ständerkern (2) besitzt eine Mehrheit von Blechschnitte (3) gestapelt aufeinander mit einer Mehrheit von innerlich hervorstehenden Zähne (4) die sich hintereinander ausstrecken entlang einer inneren Peripherie des Ständekerns (2), um Wicklungsnute (5) und longitudinale Rinnen (9) in Form von peripheren Ungleichförmigkeiten auf lateraler Oberfläche des Ständerkerns (2) zu bilden, longitudinale Rinnen (9) sind ringförmig angeordnet, jede Rinne (9) ist in einer Linie mit bezüglich einer der besagten innerlich hervorstehenden Zähne (4) und Wicklungsnute (5),
besagte Methode besteht aus Schritten von
(a) Zusammenbau jedes Blechschnitts (3) oder Gruppe von Blechschnitten (3) in einer aufeinanderfolgender Weise,
(b) Fixierung von aufeinander zusammengebauten Blechschnitten (3) oder Gruppe von Blechschnitten (3) in Axialrichtung des Ständekerns (2),
(c) Injektion von Aluminium direkt auf den Ständekern (2) im Innern einer Gussform durch Spritzgießen von Aluminium, wo Aluminium direkt auf den Ständekern gespritzt wird,
(2) Füllen und Bedecken von besagter longitudinaler Rinnen (9), wo ein Ständergehäuse (7) erhalten wird.

6. Eine Methode für Montierung eines Ständergehäuse (7) einer elektrischen Maschine (1) nach Anspruch 5, **dadurch gekennzeichnet, daß** das Ständergehäuse (7) so gebildet ist, daß es aus vier lateralen Seiten (10) besteht, wo eine erste Flossengruppe (8) von mindestens einer ersten lateralen Seite (10) des Ständergehäuse (7) in einem ersten Satz von parallelen Richtungen und eine zweite Flossengruppe (8) von mindestens einer zweiten lateralen Seite (10) des Ständergehäuse (7) in einem zweiten Satz von parallelen Richtungen projiziert, wo Flossen (8) in besagter ersten und zweiten Gruppen zueinander senkrecht stehen.

## Revendications

1. Machine électrique (1) ayant un noyau de stator (2) et un rotor interne disposé dans un espace formé à l'intérieur du noyau de stator (2) et pouvant tourner par rapport au noyau de stator (2) d'une manière reliée à un arbre, ledit noyau de stator (2) ayant une pluralité de tôles (3) estampées de manière identique et empilées l'une au-dessus de l'autre, chaque stratification (3) comportant plusieurs dents saillantes (4) vers l'intérieur s'étendant successivement le long d'une périphérie interne du noyau de stator (2) pour former des fentes d'enroulement (5) qui reçoivent des enroulements;
dans laquelle
un boîtier de stator (7) supportant le noyau de stator (2) est fourni par le moulage par injection d'aluminium,
le noyau de stator (2) comprend une pluralité de rainures longitudinales (9) sous la forme de non uniformités périphériques le long de la surface latérale du noyau de stator (2) et lesdites rainures longitudinales (9) étant remplies et recouvertes avec l'aluminium injecté ainsi pour former la surface périphérique intérieure du boîtier du stator (7),
**caractérisée en ce que**
les rainures longitudinales (9) sont disposées annulairement, chaque rainure (9) étant en alignement avec respectivement l'une desdites dents saillantes (4) vers l'intérieur et des fentes d'enroulement (5).

2. La machine électrique (1) selon la revendication 1, **caractérisée en ce que** le boîtier de stator (7) présente des ailettes longitudinales externes (8) sur sa surface externe avec quatre côtés latéraux (10) où un premier groupe d'ailettes (8) fait saille depuis au moins un premier côté latéral (10) du boîtier de stator (7) dans un premier ensemble de directions parallèles et un second groupe d'ailettes (8) fait saillie depuis au moins un second côté latéral (10) du boîtier de stator (7) dans un second ensemble de directions parallèles, l'une quelconque des ailettes (8) dans ledit premier groupe d'ailettes (8) étant perpendiculaire à toute autre ailette (8) dans ledit second groupe d'ailettes (8).

3. La machine électrique (1) selon la revendication 2, **caractérisée en ce que** les extrémités les plus extérieures des ailettes (8) faisant saillie vers l'extérieur depuis un côté latéral (10) forment une forme d'arc avec la même direction de courbure à chaque côté latéral (10) du boîtier (7).

4. Machine électrique (1) selon la revendication 2 ou 3, **caractérisée en ce que** les ailettes latérales (11) aux extrémités latérales d'un côté latéral (10) sont conçues de telle sorte qu'elles présentent des parties de racines adjacentes faisant saillie des côtés latéraux voisins (10).

5. Procédé pour assembler un noyau de stator (2) d'une machine électrique (1), ledit noyau de stator (2) comportant une pluralité de tôles (3) empilées l'une au-dessus de l'autre avec une pluralité de dents saillantes (4) vers l'intérieur s'étendant successivement le long de la périphérie interne du noyau de stator (2) pour former des fentes d'enroulement (5) et des rainures longitudinales (9) sous forme de non uniformités périphériques sur la surface latérale du noyau de stator (2), les rainures longitudinales (9) sont disposées annulairement, chaque rainure (9) étant alignée avec respectivement l'une des dents (4) en saillie vers l'intérieur et des fentes d'enroulement (5),
ledit procédé comprenant les étapes de
(a) assembler de manière successive chaque stratification (3) ou groupe de tôles (3)
(b) fixer des tôles successivement assemblées (3) ou un groupe de tôles (3) dans la direction axiale du noyau de stator (2),
(c) injecter de l'aluminium directement sur le noyau du stator (2) à l'intérieur d'un moule par moulage par injection d'aluminium où l'aluminium est injecté directement sur le noyau du stator
(2) pour remplir et recouvrir lesdites rainures longitudinales (9) où un carter de stator (7) est obtenu.

6. Procédé pour assembler un boîtier de stator (7) d'une machine électrique (1) selon la revendication 5, **caractérisé en ce que** le boîtier de stator (7) est façonné de manière à comprendre quatre côtés latéraux (10) où un premier groupe d'ailettes (8) projette d'au moins un premier côté latéral (10) du boîtier de stator (7) dans un premier ensemble de directions parallèles et un second groupe d'ailettes (8) fait saillie depuis au moins un second côté latéral (10) du stator (7) dans un second ensemble de directions parallèles, les ailettes (8) dans lesdits premier et second groupes étant perpendiculaires l'une par rapport à l'autre.
